# EUROPEAN PATENT APPLICATION

(11) **EP 4 258 508 A1**
(43) Date of publication of application: **11.10.2023**
(21) Application number: 22166565.6
(22) Date of filing: 04.04.2022
(51) Int. Cl.: H02J 7/00

(54) **SYSTEM AND METHOD FOR BATTERY MANAGEMENT**

(71) Applicant: GE Aviation Systems Limited, Bishops Cleeve Cheltenham Gloucestershire GL52 8SF (GB)
(72) Inventor: CHEALE, Kevin Edmund, Cheltenham, GL52 8SF (GB)
(74) Representative: Openshaw & Co.

(57) **Abstract**

During a maintenance operation and in a predetermined sequence, selected ones of a plurality of gates of a passive balancing electrical network are opened and closed. The passive balancing electrical network is coupled to the plurality of battery cells. The passive balancing electrical network includes multiple unintentional resistances and the multiple unintentional resistances inherent to the plurality of battery cells or a structure of the passive balancing electrical network. These unintentional resistances are utilized to identify location and nature of failures within the network to allow preparing the item for safe handling.

## Description

### Technical Field

These teachings relate generally to batteries and more particularly to evaluating the conditions of batteries.

### Background

Batteries are used in various applications. For examples, batteries can be used in different applications aboard aircraft. Sometimes these batteries need to be removed and shipped to service centers for repair or other purposes. In order to be shipped safely and/or meet various governmental regulations, a battery often needs to have its power or charge reduced (e.g., to around 30% full capacity). Balancing or discharge networks are coupled to cells of batteries to ensure the cells are maintained in the same condition for normal use.

However, faults present in the battery and/or the discharge network can prevent the battery from being shipped since the battery cannot be safely or accurately discharged.

### Brief Description of the Drawings

Various needs are at least partially met through provision of the method and apparatus for battery management described in the following detailed description, particularly when studied in conjunction with the drawings. A full and enabling disclosure of the aspects of the present description, including the best mode thereof, directed to one of ordinary skill in the art, is set forth in the specification, which refers to the appended figures, in which:
FIG. 1 comprises a diagram as configured in accordance with various embodiments of these teachings;
FIG. 2 comprises a flow diagram as configured in accordance with various embodiments of these teachings;
FIG. 3 comprises a flow diagram as configured in accordance with various embodiments of these teachings;
FIG. 4 comprises a flow diagram as configured in accordance with various embodiments of these teachings;
FIG. 5 comprises a diagram as configured in accordance with various embodiments of these teachings; and
FIG. 6 comprises a diagram as configured in accordance with various embodiments of these teachings.

Elements in the figures are illustrated for simplicity and clarity and have not necessarily been drawn to scale. For example, the dimensions and/or relative positioning of some of the elements in the figures may be exaggerated relative to other elements to help to improve understanding of various embodiments of the present teachings. Also, common but well-understood elements that are useful or necessary in a commercially feasible embodiment are often not depicted in order to facilitate a less obstructed view of these various embodiments of the present teachings. Certain actions and/or steps may be described or depicted in a particular order of occurrence while those skilled in the art will understand that such specificity with respect to sequence is not actually required.

### Detailed Description

The present approaches automatically determine fault locations in a battery discharge network (including at the battery) so that a battery can be shipped safely. In the approaches described herein, the location of the faults and potentially the type of fault in a battery discharge network (or at a battery) are determined. Once the location of the faults and/or type of faults are determined, a plan can be determined to safely discharge the battery to a charge level so that the battery can be safely shipped, moved, and/or serviced. Advantageously, the systems provided herein can use existing passive load balancing networks (used to discharge batteries) without requiring changes to the electronic hardware in these networks. In these regards and in aspects, the approaches provided herein can be implemented in software with these existing networks, therefore, not requiring any changes to existing hardware (e.g., electrical components) in the existing passive load balancing networks.

The present approaches have wide applicability in various use-case environments. For example, the present approaches are applicable to batteries or battery packs that are used in conjunction with aircraft or aircraft systems and maintenance operations with respect to these batteries. However, these approaches are not limited to batteries deployed with aircraft or associated with aircraft systems and can be utilized with battery systems outside of aircraft such as with automobiles, ships, drones, automated vehicles, buildings, electronic devices, or any other use situation, device, or environment.

In many of these embodiments, a system includes a plurality of battery cells, a controller, and a passive balancing electrical network. The plurality of battery cells are electrically coupled together in a battery pack.

The passive balancing electrical network is coupled to the plurality of battery cells and to the controller. The passive balancing electrical network comprises a plurality of gates that are configured to be selectively opened and closed by the controller. The passive balancing electrical network includes multiple unintentional resistances and the multiple unintentional resistances are inherent to the battery cells or a structure of the passive balancing electrical network.

During a maintenance operation of the battery or battery pack, the controller is configured to: in a predetermined sequence, open and close selected ones of the plurality of gates of the passive balancing electrical network. The controller is configured to responsively measure selected voltages in the passive balancing electrical network and perform an analysis of the measured selected voltages. The analysis compares the measured selected voltages to expected voltages. The expected voltages are impacted by and account for the multiple unintentional resistances. The expected voltages are determined prior to the maintenance operation. In aspects, the measured selected voltages form a measured pattern, the expected voltage forms an expected pattern, and the analysis compares the measured pattern to the expected pattern.

In some examples, the analysis compares changes in measured voltages to expected changes. For example, in a non-fault condition, a certain configuration of gates opened and closed may be expected to produce a particular voltage to drop from 4 volts to 0 volts at a certain location in the passive balancing electrical network. However, the actual measured voltage only drops to 2 volts. In this example, the changes in voltage (i.e., actual change of 2 volts and expected change of 4 volts) are considered in the analysis. This aspect is advantageous because it does not depend upon absolute values, which may change. However, it will be appreciated that as the approaches provided herein can also consider or analyze absolute measured voltages and absolute expected voltages. In other words, the approaches provided herein are not limited to particular ways of considering voltages.

In other aspects, the analysis determines a fault type. Various types of fault types can be determined. For instance, the fault type may be determined to be an open circuit, a short circuit or an unexpected impedance anywhere in the circuit including within the battery cell. Fault types may also be associated with a fault location, for example, an open circuit at a particular point in the passive balancing electrical network.

In other aspects, the controller determines an action based on the fault type or the fault location. In examples, the action comprises discharging one or more of the plurality of battery cells.

In examples, the system is deployed on an aircraft. In other examples, the system is disposed on a ground-based vehicle such as a car or truck. In yet other examples, the system is deployed at a service or maintenance center.

In examples, where the system is deployed on an aircraft, the controller is configured to selectively open and close selected ones of the plurality of gates during flight of the aircraft.

In other examples, the expected voltages are determined in a testing phase before the maintenance operation is performed. For example, expected voltages in a passive balancing electrical network are measured with no faults in the passive balancing electrical network, and faults at various locations in the passive balancing electrical network. The measurements made in each of these situations comprises a pattern than can be compared to actual values in the passive balancing electrical network.

In still other examples, the predetermined sequence is dynamically changeable. For example, a predetermined sequence of opening and closing gates in the passive balancing electrical network can be changed over time. In yet other examples, the predetermined sequence is fixed.

In others of these embodiments, during a maintenance operation and in a predetermined sequence, selected ones of a plurality of gates of a passive balancing electrical network are opened and closed. The passive balancing electrical network is coupled to the plurality of battery cells. The passive balancing electrical network includes multiple unintentional resistances and the multiple unintentional resistances inherent to the plurality of battery cells or a structure of the passive balancing electrical network.

Selected voltages are responsively measured in the passive balancing electrical network. An analysis of the measured selected voltages is performed. The analysis compares the measured selected voltages to expected voltages. The expected voltages are impacted by and account for the multiple unintentional resistances.

The terms and expressions used herein have the ordinary technical meaning as is accorded to such terms and expressions by persons skilled in the technical field as set forth above except where different specific meanings have otherwise been set forth herein. The word "or" when used herein shall be interpreted as having a disjunctive construction rather than a conjunctive construction unless otherwise specifically indicated. The terms "coupled," "fixed," "attached to," and the like refer to both direct coupling, fixing, or attaching, as well as indirect coupling, fixing, or attaching through one or more intermediate components or features, unless otherwise specified herein.

The singular forms "a", "an", and "the" include plural references unless the context clearly dictates otherwise.

Approximating language, as used herein throughout the specification and claims, is applied to modify any quantitative representation that could permissibly vary without resulting in a change in the basic function to which it is related. Accordingly, a value modified by a term or terms such as "about", "approximately", and "substantially", are not to be limited to the precise value specified. In at least some instances, the approximating language may correspond to the precision of an instrument for measuring the value, or the precision of the methods or machines for constructing or manufacturing the components and/or systems. For example, the approximating language may refer to being within a 10 percent margin.

The foregoing and other benefits may become clearer upon making a thorough review and study of the following detailed description.

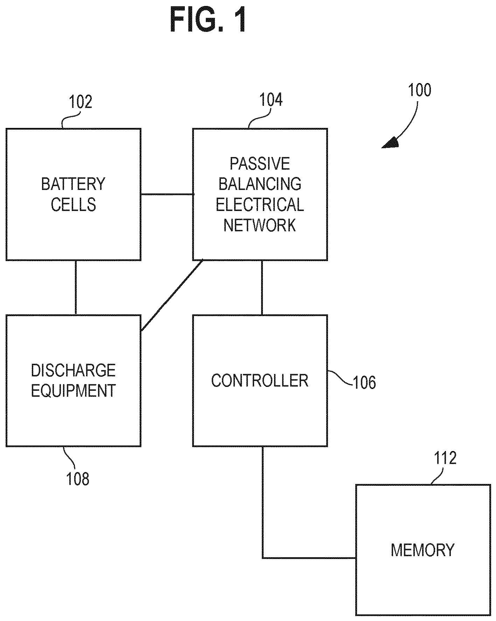

Referring now to FIG. 1, a system 100 for battery management includes a plurality of battery cells 102, a passive balancing electrical network 104, and a controller 106. The plurality of battery cells 102 are electrically coupled together and form a battery pack.

The plurality of battery cells 102 comprise multiple battery cells. In aspects, each of the plurality of cells 102 includes an anode, a cathode, and an electrolyte disposed between the anode and cathode. In examples, the plurality of cells form a Li-ion battery pack.

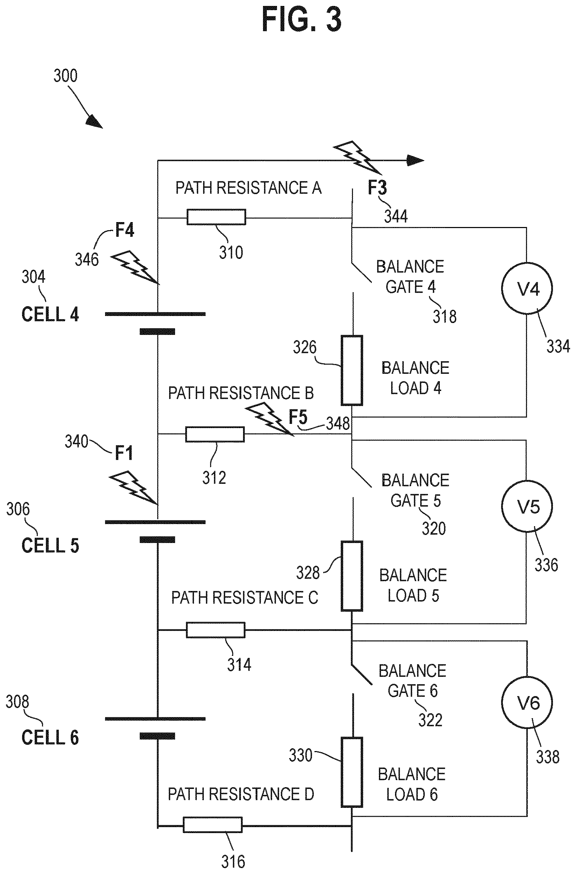

The passive balancing electrical network 104 is coupled to the plurality of battery cells 102 and to the controller 106. The passive balancing electrical network 104 comprises a plurality of gates (see. FIG. 3) that are configured to be selectively opened and closed by the controller 106. The passive balancing electrical network 104 also includes multiple unintentional resistances and the multiple unintentional resistances are inherent to the plurality of battery cells 102 and/or the structure of the passive balancing electrical network 104. For example, the joints, paths (e.g., wires or other electrical conduits), and/or materials of the passive balancing electrical network 104 create, form, or have unintentional resistances. In other words, the unintentional resistances are not resistors or other elements intentionally inserted into the passive balancing electrical network 104. Instead, the unintentional resistances are inherent to the system 100 because of the structure, materials, configuration, dimensions, shapes, and/or other factors of the passive balancing electrical network 104 (or elements in the passive balancing electrical network 104) or the plurality of battery cells 102.

It will be appreciated that as used herein the term "controller" refers broadly to any microcontroller, computer, or processor-based device with processor, memory, and programmable input/output peripherals, which is generally designed to govern the operation of other components and devices. It is further understood to include common accompanying accessory devices, including memory, transceivers for communication with other components and devices, etc. These architectural options are well known and understood in the art and require no further description here. The controller 106 may be configured (for example, by using corresponding programming stored in a memory 112 as will be well understood by those skilled in the art) to carry out one or more of the steps, actions, and/or functions described herein. The controller 106 may include a memory that includes computer instructions that implement any of the functions described herein.

The system 100 may be deployed in an operational environment. During a maintenance operation of the system 100 (or at some other appropriate time), the controller 106 is configured to: in a predetermined sequence, open and close selected ones of the plurality of gates of the passive balancing electrical network 104. The controller 106 is configured to then responsively measure selected voltages in the passive balancing electrical network 104 and perform an analysis of the measured selected voltages. In examples, the analysis compares the measured change in the selected voltages to the expected change in the voltages. In other example, the analysis considers absolute voltage values and absolute expected voltage values.

The expected voltages (either absolute or changes) may be determined by tests (previously performed in a testing environment or phase before the maintenance operation is performed) and may be stored in the memory 112 that is accessed by the controller 106. The expected voltages measured during testing are impacted by and account for the multiple unintentional resistances. For example, an operational and un-faulted passive balancing electrical network 104 produces a first pattern of voltage readings. A fault at a first location having certain type (short or open circuit) in the passive balancing electrical network 104 produces a second pattern of voltage readings. A fault at a second location having certain type (short or open circuit) in the passive balancing electrical network 104 produces a third pattern of voltage readings. By comparing the actual readings made during the maintenance operation to the first pattern, the second pattern, and the third pattern, it can be determined (based upon which pattern matches the actual readings) whether a fault exists, the type of fault, and/or the location of the fault.

An action is determined by the controller 106. In aspects, the effects of actions are to discharge a predetermined or selected amount of one or more of the plurality of battery cells 102. The actions may be determined by fault location and/or fault type of the fault in the passive balancing electrical network 104. For instance, some fault types at some locations would require selected gates to be closed or multiple gates closed in a predetermined sequence. In other cases, other fault types at other locations require other actions (e.g., coupling a separate load or other discharge equipment 108 to the plurality of battery cells 102. In examples, a small amount of discharge (e.g., below a predetermined threshold) may only need selected gates to be activated while a large discharge may require the use of a separate load.

The discharge equipment 108 may be electrically coupled to the plurality of battery cells 102 and/or the passive balancing electrical network 104 in order to discharge one or more of the plurality of battery cells 102. In this case, the discharge equipment 108 is an electrical load. As mentioned and in other examples, the action may be selectively opening and/or closing gates of the passive balancing electrical network 104 by the controller 106. In this case, the discharge equipment 108 is omitted and not used.

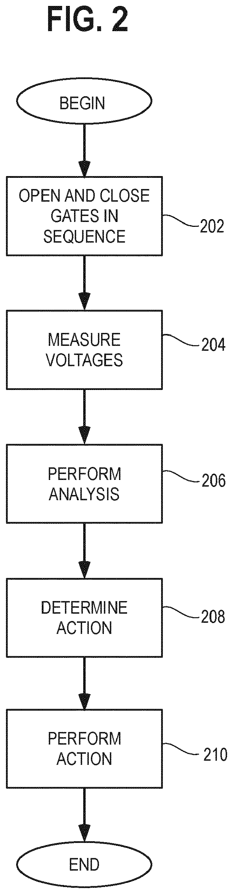

Referring now to FIG. 2, one example of an approach for battery management is described. In this example, a passive balancing electrical network (e.g., the passive balancing electrical network 104) is coupled to a plurality of battery cells (e.g., the plurality of battery cells 102). The passive balancing electrical network (e.g., the passive balancing electrical network 104) includes multiple unintentional resistances and the multiple unintentional resistances are inherent to the plurality of battery cells or a structure of the passive electrical balancing network.

At step 202, during a maintenance operation and in a predetermined sequence, selected ones of a plurality of gates of a passive balancing electrical network (e.g., the passive balancing electrical network 104) are opened and closed. In examples, a controller (e.g., the controller 106) sends electrical or electronic control signals to the gates and the control signals are effective to open and close these gates.

At step 204, selected voltages are responsively measured in the passive balancing electrical network 104, for example by a controller (e.g., the controller 106). The selected voltages can be directly measured by any appropriate instruments or sensor. Alternatively, voltages, currents, or other parameters can be measured at certain locations within the passive balancing electrical network and the desired voltages can be derived from the voltages, currents, or other parameters.

At step 206, an analysis of the measured selected voltages is performed, for example, by a controller (e.g., the controller 106). The analysis compares the measured selected voltages to expected voltages. The expected voltages are impacted by and account for the multiple unintentional resistances. As mentioned, either absolute voltages or voltage changes (measured or expected) can be utilized.

At step 208, an action is determined. The actions may be determined by fault location and/or fault type. For instance, the fault type may be determined to be an open circuit or a short circuit, and an open circuit at a particular point in the passive balancing electrical network. In one example of an action, discharge equipment (e.g., discharge equipment 108) such as a load may be electrically coupled to the plurality of battery cells (e.g., the plurality of battery cells 102) and/or the passive balancing electrical network (e.g., the passive balancing electrical network 104). In other examples, the action may be selectively opening and/or closing gates of the passive balancing electrical network.

At step 210, the action is performed. For example, the discharge equipment is attached and the gates are selectively closed. The effects of these actions is to drain or discharge one or more of the plurality of battery cells (e.g., the battery cells 102).

Referring now to FIG. 3, one example of a passive balancing electrical network 300 is described.

The passive balancing electrical network 300 includes a first cell (cell 4) 304, a second cell (cell 5) 306, third cell (cell 6) 308, a first balance gate (gate 4) 318, a second balance gate (gate 5) 320, and a third balance gate (gate 6) 322. Other cells and gates (e.g., cells 1-3 and gates 1-3) may be present but are not shown in this diagram for simplicity.

The passive balancing electrical network 300 also includes a first path resistance (path resistance A) 310, a second path resistance (path resistance B) 312, a third path resistance (path resistance C) 314, and a fourth path resistance (path resistance D) 316. These path resistances are also referred to as "unintentional resistances" herein. As mentioned, these resistances represent resistances inherent to the joints, paths (e.g., wires or other electrical conduits), and/or materials of the passive balancing electrical network 300. These resistances are described as unintentional because they have not been inserted intentionally into the passive balancing electrical network 300.

The cells 304, 306, 308 identified within the electrical network 300 also have inherent resistances which impact the measurements and techniques discussed. These inherent resistances are not identified in FIG. 3.

The passive balancing electrical network 300 also includes a first balance load (balance load 4) 326, a second balance load (balance load 5) 328, and a third balance load (balance load 6) 330. The first balance load 326, second balance load 328, and third balance load 330 are selected by the designer of the passive balancing electrical network 300 and can have values in the tens of ohms.

First voltage (V4) 334 represents the voltage measured across the first cell 304. Second voltage (V5) 336 represents the voltage measured across the second cell 306. Third voltage (V6) 338 represents the voltage measured across the third cell 308. These voltages 334, 336, 338 may be measured by a controller (e.g., the controller 106).

Various faults could be present in the passive balancing electrical network 300. These faults are marked at certain fault locations and include a first fault at a first fault location (F1) 340, a second fault outside the network 300 (not shown in FIG. 3), a third fault at a third fault location (F3) 344, a fourth fault at a fourth fault location (F4) 346, and a fifth fault at a fifth fault location (F5) 348. A sixth fault (at the first fault location F1 and referred to as fault location F6) could be an excessive increase in a cell resistance. The faults 340, 344, 346, and 348 may be open or short circuits, in examples. These locations 340, 344, 346, 348 may be selected as to whether faults are most likely to occur. There is also an inherent cell resistance that can vary with the health of the cell.

In one example of the operation of the system of FIG. 3, the passive balancing electrical network 300 uses the balance gates 318, 320, 322 and balance loads 326, 328, and 330 from each cell 304, 306, and/or 308. Voltages 334, 336, and 338 are monitored (e.g., by a controller 106). The inherent path resistances 312, 314, 316, and 318 exist throughout the passive balancing electrical network 300 and these impact the voltages measured with different gate configurations as described in further detail below.

For example, according to an example gate configuration (e.g., gate configuration 3 in first section 402 of table 400), if only the second balance gate (gate 5) 320 is closed, then current flows through the second balance load (balance load 5) 328. However, current also flows through the second path resistance (path resistance B) 312 and the third path resistance (path resistance C) 314. The cell voltage is therefore divided across the second balance load (balance load 5) 328 and both the second path resistance (path resistance B) 312 and the third path resistance (path resistance C) 314 resulting in a reduction in the voltage seen across second voltage (V5) 336. V5-- = V5 - VB - VC, where V5-- represents the voltage seen across voltage 336, V5 represents the nominal voltage seen across voltage 336, VB represents the reduction in voltage due to the second path resistance (path resistance B) 312, and VC represents the reduction in voltage due to the third path resistance (path resistance C) 314.

Also, the current and resultant voltage drop across the third path resistance (path resistance C) 314 results in an increase in the voltage seen by V6. V6+ = V6 + VC where V6+ represents the increased voltage seen across voltage 338, V6 represents the nominal voltage seen across voltage 338, and VC represents the increase in voltage due to the third path resistance (path resistance C) 314. Thus, the condition of balancing circuitry associated with one cell (or the gate configuration) has an effect on the voltages measured at other cells. By closing the balance gates 318, 320, 322 in a controlled sequence or set of gate configurations and monitoring the voltages 334, 336, and 338, a determination is made of the location and/or types of faults and appropriate actions can be taken.

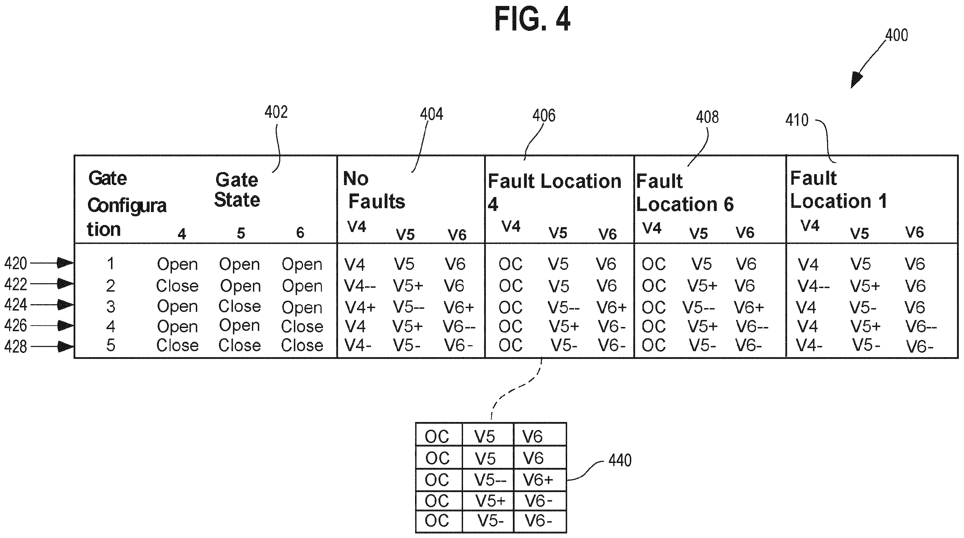

Referring now to FIG. 4, one example of an approach that utilizes the passive balancing electrical network 300 to determine fault location is described. As shown in FIG. 4, a table 400 includes a first section 402, a second section 404, a third section 406, a fourth section 408, and a fifth section 410. The table 400 has a first row 420, a second row 422, a third row 424, a fourth row 426, and a fifth row 428 corresponding to gate configurations 1-5, each gate configuration having a different set of gate states (open or close) for the balance gates (gate 4) 318, (gate 5) 320, and gate 322 (gate 6).

A pattern of measured voltages, relative to a nominal voltage, for each of the gate configurations 1-5 is compared with patterns (sections 402, 404, 404, 406) in the table 400 to determine no fault (e.g., second section 404) or the location of a fault (e.g., one of third section 406, fourth section 408, and fifth section 410) in the passive balancing electrical network 300.

The first section 402 of the table 400 represents gate configurations (gate states for each of the balance gates (gate 4) 318, (gate 5) 320, gate 322 (gate 6)) in the passive balancing electrical network 300. More specifically, each row 420, 422, 424, 426, 428 in the first section 402 (and the second section 404, the third section 406, and the fourth section 408) represents a different gate configuration 1-5. For example, the first row 420 represents when all the balance gates (gate 4) 318, (gate 5) 320, gate 322 (gate 6) are open. The second row 422 represents when the first balance gate (gate 4) 318 is closed, the second balance gate (gate 5) 320 is open, and the third balance gate 322 (gate 6) is open. The third row 424 represents when the first balance gate (gate 4) 318 is open, the second balance gate (gate 5) 320 is closed, and the third balance gate 322 (gate 6) is open. The fourth row 422 represents when the first balance gate (gate 4) 318 is open, the second balance gate (gate 5) 320 is open, and the third balance gate 322 (gate 6) is closed. The fifth row 428 represents when all the balance gates (gate 4) 318, (gate 5) 320 gate 322 (gate 6) are closed.

It will be understood that the gate configurations indicated in the rows 420, 422, 424, 426, and 428 are sequentially executed (e.g., by the controller 106). The voltages 334, 336, 338 (V4, V5, and V6) measured (e.g., by the controller 106) are potentially different for each different gate configuration, creating a pattern of voltage measurements for the different gate configurations. In addition, the voltages 334, 336, 338 measured are potentially different where a fault occurs at one of the locations 340, 344, 346, 348, creating a pattern that is different for each fault location.

A pattern of measured values is compared to the predetermined voltage patterns seen in sections 404, 406, 408, 410. Testing determines that section 404 is the expected voltage pattern for no faults; section 406 is the expected voltage pattern for a fault at location 346; section 408 is the expected voltage pattern for location 6 (e.g., at the cell 306); and section 410 is the expected voltage pattern for location 340. As described herein, the measured values and expected values are voltage values. However, it will be appreciated that other electrical parameters can also be used.

The second section 404 of the table 400 represents a first expected pattern of voltage values where there is no fault in the passive balancing electrical network 300. Each row has an expected value of voltages 334, 336, 338 (V4, V5, and V6). For example, with no fault existing and the gate configuration of the first row 420 (configuration 1: the first balance gate (gate 4) 318 is open, the second balance gate (gate 5) 320 is open, and the third balance gate 322 (gate 6) is open), the expected voltage pattern is that voltage 334 is expected to be measured as the nominal value of V4, voltage 336 is expected to be measured as the nominal value of V5, and voltage 338 is expected to be measured as the nominal value of V6.

When there is no fault and the configuration of the gates is selected according to row 422 (configuration 2: the first balance gate (gate 4) 318 is closed, the second balance gate (gate 5) 320 is open, and the third balance gate 322 (gate 6) is open), the voltage 334 is expected to be measured as a value less than the nominal value of V4 (V4 - -), voltage 336 is expected to be measured as a value somewhat more than the nominal value of V5 (V5+), and voltage 338 is expected to be measured as the nominal value of V6. Use of plus (+) or minus (-) symbols in the table indicate expected values to be somewhat more or less than the nominal values (V4, V5, V6) of a battery cell 304, 306, 308. Use of double minus (- -) or double plus (++) indicates a larger magnitude of difference from the nominal values of the battery cell 304, 306, 308.

The third section 406 of the table 400 represents a second expected pattern of voltage values where there is a fault at location (F4) 346 in the passive balancing electrical network 300. Each row has an expected value of voltages 334, 336, 338 (V4, V5, and V6) for a different gate configuration. For example, with a fault at location F4 346 and the gate configuration of the first row 420 (configuration 1: the first balance gate (gate 4) 318 is open, the second balance gate (gate 5) 320 is open, and the third balance gate 322 (gate 6) is open), the voltage 334 is expected to be measured as an open circuit (OC), the voltage 336 is expected to be measured as the nominal value of V5, and voltage 338 is expected to be measured as the nominal value of V6.

When the configuration of the gates is selected according to row 422 (configuration 2: the first balance gate (gate 4) 318 is closed, the second balance gate (gate 5) 320 is open, and the third balance gate 322 (gate 6) is open), the voltage 334 is expected to be measured as an open circuit (OC), voltage 336 is expected to be measured as the nominal value of V5, and voltage 338 is expected to be measured as the nominal value of V6.

The fourth section 408 of the table 400 represents a third expected pattern of voltage values where there is a fault at the cell 306 (and referred to here as location or fault F6) in the passive balancing electrical network 300. Each row has an expected value of voltages 334, 336, 338 (V4, V5, and V6) for a different gate configuration. For example, with fault at location F6 and the gate configuration of the first row 420 (configuration 1: the first balance gate (gate 4) 318 is open, the second balance gate (gate 5) 320 is open, and the third balance gate 322 (gate 6) is open), the voltage 334 is expected to be measured as an open circuit (OC), the voltage 336 is expected to be measured as the nominal value of V5, and the voltage 338 is expected to be measured as the nominal value of V6.

When the configuration of the gates is selected according to row 422 (configuration 2: the first balance gate (gate 4) 318 is closed, the second balance gate (gate 5) 320 is open, and the third balance gate 322 (gate 6) is open), the voltage 334 is expected to be measured as an open circuit (OC), the voltage 336 is expected to be measured as somewhat more than the nominal value of V5 (V5+), and voltage 338 is expected to be measured as the nominal value of V6.

The fifth section 410 of the table 400 represents a fourth expected pattern where there is a fault at location F1 340 (within Cell 5 (306) where the cell has increased resistance) in the passive balancing electrical network 300. Each row has an expected value of voltages 334, 336, 338 (V4, V5, and V6) for a different gate configuration. For example, with fault at location F1 340 and the gate configuration of the first row 420 (configuration 1: the first balance gate (gate 4) 318 is open, the second balance gate (gate 5) 320 is open, and the third balance gate 322 (gate 6) is open), the voltage 334 is expected to be measured as the nominal value of V4, the voltage 336 is expected to be measured as the nominal value of V5, and the voltage 338 is expected to be measured as the nominal value of V6.

When the configuration of the gates is selected according to row 422 (configuration 2: the first balance gate (gate 4) 318 is closed, the second balance gate (gate 5) 320 is open, and the third balance gate 322 (gate 6) is open), the voltage 334 is expected to be measured as less than the nominal value of V4 (V4 - -), the voltage 336 is expected to be measured as somewhat more than the nominal value of V5 (V5+), and voltage 338 is expected to be measured as the nominal value of V6.

When the configuration of the gates is selected according to row 424 (configuration 3: the first balance gate (gate 4) 318 is open, the second balance gate (gate 5) 320 is closed, and the third balance gate 322 (gate 6) is open), the voltage 334 is expected to be measured as the nominal value of V4, voltage 336 is expected to be measured as somewhat less than the nominal voltage of V5 (V5-), and voltage 338 is expected to be measured as the nominal voltage of V6.

In aspects, the table 400 reflects that as the gates are opened and closed in the specified sequence (e.g., one of the gate configurations 1-5 of the rows 420, 422, 424, 426, 428 at a time), and voltages 334, 336, 338 (V4, V5, and V6) are measured in the passive balancing electrical network 300 for each gate configuration. During a testing phase and with known faults (or no faults), for each gate configuration, voltages at various locations 334, 336, 338 in the passive balancing electrical network are measured and these become the expected values entered into the table 400. For example, the gates 318, 320, 322 of the passive balancing electrical network 300 may be sequentially opened and closed during the testing phase with no faults, a fault at location 4 (F4, 346), a fault at location 6 (at the cell 306), and a fault at location 1 (F1, 340). The gates 318, 320, 322 of the passive balancing electrical network 300 are actuated (opened and closed) according to gate configurations of rows 420, 422, 424, 426, and 428 of the table 400. Voltages 334, 336, 338 are measured for each gate configuration of the sequence. In the table, the measured voltages are represented as a relative value including, open circuit (OC), nominal values V4, V5, V6, and/or various changes (-, --, +, ++) from nominal values V4, V5, and V6. The relative differences values may be entered into the table 400 (in sections 404, 406, 408, and 410 of the table 400) and form patterns of expected voltages (e.g., 404, 406, 408, 410). In FIG. 4, each pattern of expected voltages 404, 406, 408, 410 has three columns of voltages 334, 336, 338 and five rows 420, 422, 424, 426, 428 of gate configurations.

Then, during a maintenance phase (during usage) of using the passive balancing electrical network 300, a pattern of measured voltages 334, 336, 338 at different gate configurations can be measured and compared to the patterns of expected voltages 404, 406, 408, 410 presented in the table 400. For example, the gates 318, 320, 322 of the passive balancing electrical network 300 may be sequentially opened and closed according to the gate configurations of rows 420, 422, 424, 426, and 428 of the table 400. Voltages 334, 336, 338 are measured for each gate configuration of the sequence and represented as a relative value including, open circuit (OC), nominal values V4, V5, V6, and/or various changes (-, --, +, ++) from nominal values V4, V5, and V6. The measured voltages 334, 336, 338 form a pattern of measured voltages 440 with columns of voltages 334, 336, 338 and the rows 420, 422, 424, 426, 428 of gate configurations.

The pattern of measured voltages 440 is compared to the patterns of expected voltages in sections 404, 406, 408, and 410 of the table 400. A match determines a location of a fault (or that there is no fault). For example, in FIG. 4, the pattern of measured voltages 440 matches the pattern of expected voltages 406, indicating a fault at location 4 (F4, 346).

As mentioned, in this example, the voltages in the table 400 represent relative difference from a nominal voltage and not absolute voltage. This particular approach is advantageous because as nominal voltage values for V4, V5, and V6 change, the table 400 need not be changed or updated.

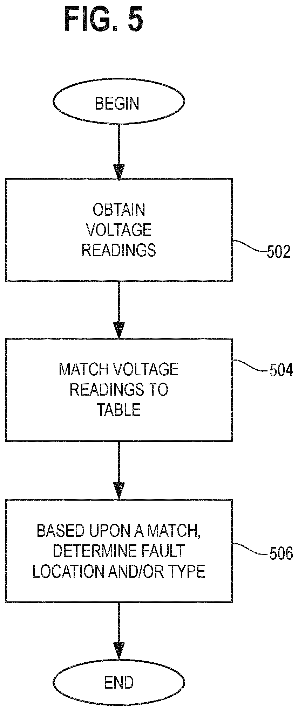

Referring now to FIG. 5, one example of determining fault location and/or type is described. In aspects, the approach of FIG. 5 can be implemented by a controller (e.g., controller 106) to determine fault location and/or type.

At step 502, voltage readings are obtained. As mentioned, these readings can be different voltage readings directly taken at different locations across the passive balancing electrical network (e.g., the passive balancing electrical network 300) made by a controller (e.g., the controller 106) via sensors (e.g., voltages 334, 336, 338) coupled to the controller. Alternatively, voltages, currents, or other parameters can be measured at certain locations within the passive balancing electrical network and the desired voltages can be derived from the voltages, currents, or other parameters.

At step 504, the voltage readings are matched to expected readings in a table (or other data structure or algorithm). For example, during a maintenance operation, voltage readings are measured at step 502 at various points (e.g., voltages 334, 336, 338) in the passive balancing electrical network (e.g., the passive balancing electrical network 300). The measured voltage readings (e.g., voltages 334, 336, 338) form a pattern and the pattern defines whether a fault is present and the location and/or type of fault. A comparison is made between the measured patterns and expected patterns. For example, the measured pattern may match an expected pattern for no faults (e.g., section 404 of table 400). In another example, the measured pattern may match a first expected pattern representing a first fault at a first known location results (e.g., section 406 of table 400). In yet another example, the measured pattern may match a second expected pattern for a second fault at a second known location (e.g., section 408 of table 400).

At step 506, based upon a match, the fault location (e.g., identified in sections 406, 408, 410) and/or type is determined. For example, if the actual measured voltage pattern matches the expected set (e.g., section 404), then there is no fault. If the actual measured voltage pattern matches the first fault pattern (e.g., section 406 of the table 400), then a fault is known to exist and the fault is at the first location. If the actual measured voltage pattern matches the second fault pattern (e.g., section 408 of the table 400), then a fault exists and the fault is at the second location. During the testing phase (when the expected patterns were determined), a certain type of fault (e.g., open or short circuit) might also have been used and a particular expected pattern for a particular fault location. Hence, the expected pattern may also identify the fault type as well as the fault location.

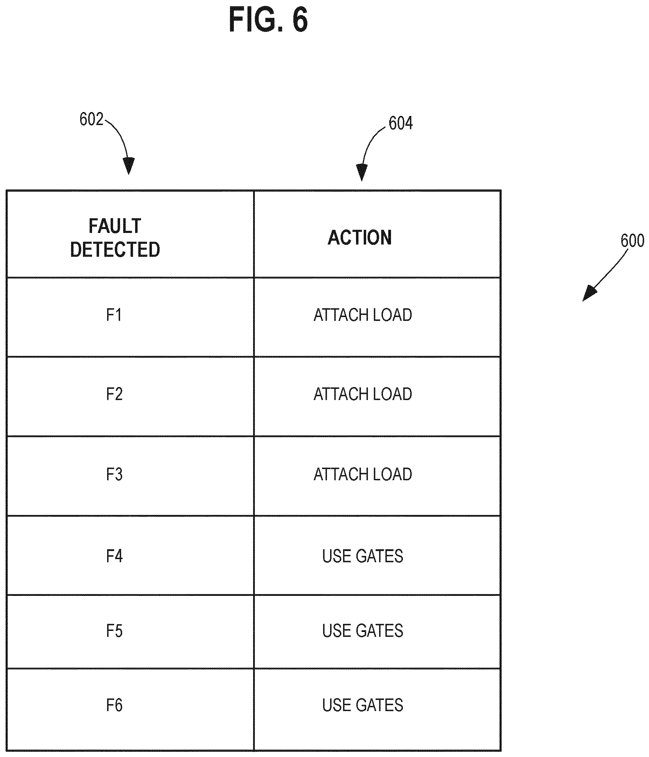

Referring now to FIG. 6, one example of determining an action is described. In this example, a controller (e.g., controller 106) has identified a match (e.g., using the approach of FIG. 5) and hence a fault location since each pattern is associated with a fault location (as shown in FIG. 3) and potentially a fault type.

A lookup table 600 (or other suitable data structure) includes a first column 602 and a second column 604. The first column 602 identifies a fault at a fault location (the first fault at the first location (F1) 340, the second fault at the second fault location (F2), the third fault at the third fault location (F3) 344, the fourth fault at the fourth fault location (F4) 346, or the fifth fault at the fifth fault location (F5) 348). Based upon a given fault location, an action (attach load or use gates to discharge) is defined. For example, a first fault at the first fault location (F1) 340 has an associated action 604 of attaching a load to the passive balancing electrical network 300. A fault at the first fault location (F4) 346 has an associated action 604 of using the gates to selectively discharge one or more of the plurality of battery cells. This approach can be further refined to optimize the size of the discharge load to ensure safe and efficient discharge.

In addition, when no fault is detected an action may be performed. Certain gates (e.g., gates 318, 320, and 322) may be selectively closed to reduce the voltage in the cells 304, 306, and 308. A user may determine the amount of discharge for a particular cell 304, 306, or 308 or the amount of discharge may be automatically determined.

Advantageously, the present approaches determine fault locations in a battery discharge network (including at the battery) so that a battery can be shipped safely. The source of the faults is determined quickly and easily. Once the source of the faults is determined, a plan can be determined to safely discharge the battery to a charge level so that the battery can be safely shipped. Consequently, batteries do not have to be unnecessarily discarded because their condition, charge, or fault condition is unknown. The approaches presented herein are easy and economical to implement and do not require changing the existing electrical hardware of a system.

It should be understood that the controllers (e.g., the controller 106) provided herein may implement the various functionality described herein. In terms of hardware architecture, such a controller can include but is not limited to a processor, a memory, and one or more input and/or output (I/O) device interface(s) that are communicatively coupled via a local interface. The local interface can include, for example but not limited to, one or more buses and/or other wired or wireless connections. The processor may be a hardware device for executing software, particularly software stored in a memory. The processor can be a custom made or commercially available processor, a central processing unit (CPU), an auxiliary processor among several processors associated with the computing device, a semiconductorbased microprocessor (in the form of a microchip or chip set) or generally any device for executing software instructions.

The memory devices described herein can include any one or combination of volatile memory elements (e.g., random access memory (RAM), such as dynamic RAM (DRAM), static RAM (SRAM), synchronous dynamic RAM (SDRAM), video RAM (VRAM), and so forth) and/or nonvolatile memory elements (e.g., read only memory (ROM), hard drive, tape, CD-ROM, and so forth). Moreover, the memory may incorporate electronic, magnetic, optical, and/or other types of storage media. The memory can also have a distributed architecture, where various components are situated remotely from one another, but can be accessed by the processor.

The controllers may implement the functions described herein in any combination of hardware and software (e.g., with the software being executed by a controller). The software may be stored in any memory device and may include one or more separate programs, each of which includes an ordered listing of executable instructions for implementing the functions described herein. When constructed as a source program, the program is translated via a compiler, assembler, interpreter, or the like, which may or may not be included within the memory.

It will be appreciated that any of the approaches described herein can be implemented at least in part as computer instructions stored on a computer media (e.g., a computer memory as described above) and these instructions can be executed on a controller such as a microprocessor. However, as mentioned, these approaches can be implemented as any combination of electronic hardware and/or software.

Further aspects of the disclosure are provided by the subject matter of the following clauses:

A system, the system comprising: a plurality of battery cells electrically coupled together in a battery pack; a controller; a passive balancing electrical network, the passive balancing electrical network coupled to the plurality of battery cells and to the controller, the passive balancing electrical network comprising a plurality of gates that are configured to be selectively opened and closed by the controller, the passive balancing electrical network including multiple unintentional resistances, the multiple unintentional resistances inherent to the battery cells or a structure of the passive balancing electrical network; wherein during a maintenance operation, the controller is configured to: in a predetermined sequence, open and close selected ones of the plurality of gates of the passive balancing electrical network, responsively measure selected voltages in the passive balancing electrical network, and perform an analysis of the measured selected voltages; wherein the analysis compares the measured selected voltages to expected voltages; wherein the expected voltages are impacted by and account for the multiple unintentional resistances.

The system of any preceding clause, wherein the analysis determines a fault type or a fault location.

The system of any preceding clause, wherein the controller determines an action based on the fault type or the fault location.

The system of any preceding clause, wherein the action comprises discharging one or more of the plurality of battery cells.

The system of any preceding clause, wherein the fault type is an open circuit or a short circuit.

The system of any preceding clause, wherein the system is deployed on an aircraft.

The system of any preceding clause, wherein the controller is configured to selectively open and close selected ones of the plurality of gates during flight.

The system of any preceding clause, wherein the expected voltages comprise changes in the expected voltages and wherein the analysis compares the measured selected voltages to changes in the expected voltages.

The system of any preceding clause, wherein the predetermined sequence is dynamically changeable.

The system of any preceding clause, wherein the measured selected voltages form a measured pattern, the expected voltage forms an expected pattern, and the analysis compares the measured pattern to the expected pattern.

A method, the method comprising: during a maintenance operation, in a predetermined sequence, opening and closing selected ones of a plurality of gates of a passive balancing electrical network, the passive balancing electrical network being coupled to the plurality of battery cells, the passive balancing electrical network including multiple unintentional resistances, the multiple unintentional resistances inherent to the plurality of battery cells or a structure of the passive balancing electrical network; responsively measuring selected voltages in the passive balancing electrical network, and performing an analysis of the measured selected voltages; wherein the analysis compares the measured selected voltages to expected voltages; wherein the expected voltages are impacted by and account for the multiple unintentional resistances.

The method of any preceding clause, wherein the analysis determines a fault type or a fault location.

The method of any preceding clause, wherein an action is determined based on the fault type of the fault location.

The method of any preceding clause, wherein the action comprises discharging one or more of the plurality of battery cells.

The method of any preceding clause, wherein the fault type is an open circuit, a short circuit or high resistance.

The method of any preceding clause, wherein the method is employed on an aircraft.

The method of any preceding clause, wherein selected ones of the plurality of gates are opened and closed during a flight of the aircraft.

The method of any preceding clause, wherein the expected voltages comprise changes in the expected voltages and wherein the analysis compares the measured selected voltages to changes in the expected voltages.

The method of any preceding clause, wherein the predetermined sequence is dynamically changeable.

The method of any preceding clause, wherein the measured selected voltages form a measured pattern, the expected voltage forms an expected pattern, and the analysis compares the measured pattern to the expected pattern.

A non-transitory, machine-accessible storage medium having computer instructions and wherein the instructions are configured, when executed by a controller to cause the controller to: in a predetermined sequence, opening and closing selected ones of a plurality of gates of a passive balancing electrical network, the passive balancing electrical network being coupled to the plurality of battery cells, the passive balancing electrical network including multiple unintentional resistances, the multiple unintentional resistances inherent to the plurality of battery cells or a structure of the passive balancing electrical network; responsively measuring selected voltages in the passive balancing electrical network, and performing an analysis of the measured selected voltages; wherein the analysis compares the measured selected voltages to expected voltages; wherein the expected voltages are impacted by and account for the multiple unintentional resistances.

The non-transitory, machine-accessible storage medium of any preceding clause, wherein the analysis determines a fault type or fault location.

The non-transitory, machine-accessible storage medium of any preceding clause, wherein an action is determined based on the fault type or the fault location.

The non-transitory, machine-accessible storage medium of any preceding clause, wherein the action comprises discharging one or more of the plurality of battery cells.

The non-transitory, machine-accessible storage medium of any preceding clause, wherein the fault type is an open circuit or a short circuit.

The non-transitory, machine-accessible storage medium of any preceding clause, wherein the method is employed on an aircraft.

The non-transitory, machine-accessible storage medium of any preceding clause, wherein selected ones of the plurality of gates are opened and closed during a flight of the aircraft.

The non-transitory, machine-accessible storage medium of any preceding clause, wherein the expected voltages comprise changes in the expected voltages and wherein the analysis compares the measured selected voltages to changes in the expected voltages.

The non-transitory, machine-accessible storage medium of any preceding clause, wherein the predetermined sequence is dynamically changeable.

The non-transitory, machine-accessible storage medium of any preceding clause, wherein the measured selected voltages form a measured pattern, the expected voltage forms an expected pattern, and the analysis compares the measured pattern to the expected pattern.

Those skilled in the art will recognize that a wide variety of modifications, alterations, and combinations can be made with respect to the above-described embodiments without departing from the scope of the disclosure, and that such modifications, alterations, and combinations are to be viewed as being within the ambit of the inventive concept.

A system, the system comprising: a plurality of battery cells electrically coupled together to form a battery pack; a controller; a passive balancing electrical network, the passive balancing electrical network coupled to the plurality of battery cells and to the controller, the passive balancing electrical network comprising: a plurality of gates that are configured to be selectively opened and closed by the controller; and multiple unintentional resistances, the multiple unintentional resistances being inherent to the battery cells or a structure of the passive balancing electrical network; wherein during a maintenance operation, the controller is configured to: in a predetermined sequence, open and close selected ones of the plurality of gates of the passive balancing electrical network; responsively measure selected voltages in the passive balancing electrical network; and perform an analysis of the measured selected voltages; wherein the analysis compares the measured selected voltages to expected voltages; wherein the expected voltages are impacted by and account for the multiple unintentional resistances.

The system of any preceding clause, wherein the analysis determines at least one of a fault type and a fault location.

The system of any preceding clause, wherein the controller determines an action based on the at least one of the fault type and the fault location.

The system of any preceding clause, wherein the action comprises discharging one or more of the plurality of battery cells.

The system of any preceding clause, wherein the fault type is an open circuit, a short circuit, or high resistance.

The system of any preceding clause, wherein the system is deployed on an aircraft.

The system of any preceding clause, wherein the controller is configured to selectively open and close selected ones of the plurality of gates during flight of the aircraft.

The system of any preceding clause, wherein the expected voltages comprise changes in the expected voltages and wherein the analysis compares the measured selected voltages to changes in the expected voltages.

The system of any preceding clause, wherein the predetermined sequence is dynamically changeable.

The system of any preceding clause, wherein the measured selected voltages form a measured pattern, the expected voltage forms an expected pattern, and the analysis compares the measured pattern to the expected pattern.

A method, the method comprising: during a maintenance operation, in a predetermined sequence, opening and closing selected ones of a plurality of gates of a passive balancing electrical network, the passive balancing electrical network being coupled to a plurality of battery cells, the passive balancing electrical network including multiple unintentional resistances, the multiple unintentional resistances being inherent to the plurality of battery cells or a structure of the passive balancing electrical network; responsively measuring selected voltages in the passive balancing electrical network; and performing an analysis of the measured selected voltages, wherein the analysis compares the measured selected voltages to expected voltages, wherein the expected voltages are impacted by and account for the multiple unintentional resistances.

The method of any preceding clause, wherein the analysis determines a fault type or a fault location.

The method of any preceding clause, wherein an action is determined based on the fault type or the fault location.

The method of any preceding clause, wherein the action comprises discharging one or more of the plurality of battery cells.

The method of any preceding clause, wherein the fault type is an open circuit, a short circuit, or high resistance.

The method of any preceding clause, wherein the method is employed on an aircraft.

The method of any preceding clause, wherein selected ones of the plurality of gates are opened and closed during a flight of the aircraft.

The method of any preceding clause, wherein the expected voltages comprise changes in the expected voltages and wherein the analysis compares the measured selected voltages to changes in the expected voltages.

The method of any preceding clause, wherein the measured selected voltages form a measured pattern, the expected voltage forms an expected pattern, and the analysis compares the measured pattern to the expected pattern.

A non-transitory, machine-accessible storage medium having computer instructions and wherein the computer instructions are configured, when executed by a controller to cause the controller to: during a maintenance operation, in a predetermined sequence, open and close selected ones of a plurality of gates of a passive balancing electrical network, the passive balancing electrical network being coupled to a plurality of battery cells, the passive balancing electrical network including multiple unintentional resistances, the multiple unintentional resistances being inherent to the plurality of battery cells or a structure of the passive balancing electrical network; responsively measure selected voltages in the passive balancing electrical network, and perform an analysis of the measured selected voltages; wherein the analysis compares the measured selected voltages to expected voltages; wherein the expected voltages are impacted by and account for the multiple unintentional resistances.

## Claims

1. A system (100), the system (100) comprising:
a plurality of battery cells (102) electrically coupled together to form a battery pack;
a controller (106);
a passive balancing electrical network (300), the passive balancing electrical network (300) coupled to the plurality of battery cells (102) and to the controller (106), the passive balancing electrical network (300) comprising a plurality of gates (318, 320, 322) that are configured to be selectively opened and closed by the controller (106), the passive balancing electrical network (300) including multiple unintentional resistances (312, 314, 316), the multiple unintentional resistances (312, 314, 316) being inherent to the battery cells (102) or a structure of the passive balancing electrical network (300);
wherein during a maintenance operation, the controller (106) is configured to:
in a predetermined sequence, open and close selected ones of the plurality of gates (318, 320, 322) of the passive balancing electrical network (300), responsively measure selected voltages in the passive balancing electrical network (300), and perform an analysis of the measured selected voltages;
wherein the analysis compares the measured selected voltages to expected voltages;
wherein the expected voltages are impacted by and account for the multiple unintentional resistances (312, 314, 316).

2. The system of claim 1, wherein the analysis determines at least one of a fault type and a fault location.

3. The system of claim 2, wherein the controller (106) determines an action based on the at least one of the fault type and the fault location.

4. The system of claim 3, wherein the action comprises discharging one or more of the plurality of battery cells (102).

5. The system of any of claims 2 to 4, wherein the fault type is an open circuit, a short circuit, or high resistance.

6. The system of any preceding claim, wherein the system is deployed on an aircraft and wherein the controller (106) is configured to selectively open and close selected ones of the plurality of gates (318, 320, 322) during flight of the aircraft.

7. The system of any preceding claim, wherein the predetermined sequence is dynamically changeable.

8. The system of any preceding claim, wherein the measured selected voltages form a measured pattern, the expected voltage forms an expected pattern, and the analysis compares the measured pattern to the expected pattern.

9. A method, the method comprising:
during a maintenance operation, in a predetermined sequence, opening and closing selected ones of a plurality of gates (318, 320, 322) of a passive balancing electrical network (300), the passive balancing electrical network (300) being coupled to a plurality of battery cells (102), the passive balancing electrical network (300) including multiple unintentional resistances (312, 314, 316), the multiple unintentional resistances (312, 314, 316) being inherent to the plurality of battery cells (102) or a structure of the passive balancing electrical network (300);
responsively measuring selected voltages in the passive balancing electrical network (300), and performing an analysis of the measured selected voltages;
wherein the analysis compares the measured selected voltages to expected voltages;
wherein the expected voltages are impacted by and account for the multiple unintentional resistances (312, 314, 316).

10. The method of claim 9, wherein the analysis determines at least one of a fault type or a fault location.

11. The method of claim 10, wherein an action is determined based on the fault type or the fault location.

12. The method of claim 11, wherein the action comprises discharging one or more of the plurality of battery cells (102).

13. The method of any of claims 10 to 12, wherein the fault type is an open circuit, a short circuit, or high resistance.

14. The method of any of claims 9 to 13, wherein the method is employed on an aircraft and selected ones of the plurality of gates (318, 320, 322) are opened and closed during a flight of the aircraft.

15. The method of any of claims 9 to 14, wherein the measured selected voltages form a measured pattern, the expected voltage forms an expected pattern, and the analysis compares the measured pattern to the expected pattern.
